# EUROPÄISCHE PATENTANMELDUNG

(11) **EP 2 801 496 A2**
(43) Veröffentlichungstag der Anmeldung: **12.11.2014**
(21) Anmeldenummer: 14166330.2
(22) Anmeldetag: 29.04.2014
(51) Int. Cl.: B60L 11/00, B60L 11/18

(54) **Verfahren für ein Aufheizen einer Energiespeicheranordnung und Energiespeicheranordnung**

(30) Priorität: 08.05.2013 DE 102013208556
(71) Anmelder: Siemens Aktiengesellschaft, 80333 München (DE)
(72) Erfinder: Fischperer, Rolf, 91052 Erlangen (DE); Meinert, Michael, 91056 Erlangen (DE); Gajewski, Frank, 38104 Braunschweig (DE); Steinwachs, Hans-Joachim, 45549 Sprockhövel (DE); Schober, Axel, 99768 Ilfeld (DE)

(57) **Zusammenfassung**

Gegenstand der vorliegenden Erfindung ist ein Verfahren für ein Aufheizen einer Energiespeicheranordnung, bei dem mindestens ein erster Energiespeicher und mindestens ein zweiter Energiespeicher wechselseitig für das Laden und Entladen des jeweils anderen Energiespeichers verwendet werden.

Ferner ist eine Energiespeicheranordnung Gegenstand der vorliegenden Erfindung.

## Beschreibung

Die Erfindung betrifft ein Verfahren für ein Aufheizen einer Energiespeicheranordnung.

Elektrochemische Energiespeicher wie beispielsweise Lithium-Ionen, Blei, NiCd, oder NiNH Akkumulatoren weisen nur innerhalb eines bauartbedingten Temperaturbereichs eine für die jeweilige technische Verwendung notwendige elektrische Lade- bzw. Entladecharakteristik auf. Typischerweise sollten elektrochemische Energiespeicher daher nicht unterhalb eines unteren Schwellenwertes und nicht oberhalb eines oberen Schwellenwertes für die Temperatur verwendet werden. Dieser Zusammenhang hat insbesondere Bedeutung für in Fahrzeugen installierte Energiespeicher, weil diese je nach Einsatzort der Fahrzeuge starken Temperaturschwankungen ausgesetzt sind.

Es ist daher seit langem bekannt, Energiespeicher thermisch zu isolieren, um ein Auskühlen der Energiespeicher bei einer Außentemperatur unterhalb des unteren Schwellenwertes für die Temperatur zu verhindern.

Darüber hinaus werden Energiespeicher in Fahrzeugen häufig durch spezielle Heizsysteme aufgeheizt, wenn die Außentemperatur unterhalb des unteren Schwellenwertes für die Temperatur liegt. Solche Heizsysteme können mittels Peltierelementen, Heizdrähten oder durch einen mittels Heizdrähten erwärmten Fluidkreislauf betrieben werden. Bei der Verwendung von Heizdrähten wird ausgenutzt, dass sich elektrische Leiter erwärmen, wenn sie von elektrischen Strömen durchflossen werden. Die Heizsysteme benötigen einen gewissen Einbauraum und erhöhen außerdem die Fahrzeugmasse, was zu erhöhten Kosten in Fertigung und Betrieb führt. Ein spezielles Heizsystem ist beispielsweise durch das Produkt Zerostart - Battery Heater von Phillips and Temro Industries bekannt. Dabei muss ein aufzuheizender Energiespeicher mit einer Heizmanschette umwickelt werden, die über eine externe Stromversorgung mit Energie versorgt wird und über Heizdrähte den aufzuheizenden Energiespeicher erwärmt.

Es ist die Aufgabe der Erfindung, ein Verfahren für ein Aufheizen einer Energiespeicheranordnung anzugeben, das sich mit vergleichsweise geringem Aufwand durchführen lässt.

Die Erfindung löst diese Aufgabe durch ein Verfahren für ein Aufheizen einer Energiespeicheranordnung, bei dem mindestens ein erster Energiespeicher und mindestens ein zweiter Energiespeicher wechselseitig für das Laden und Entladen des jeweils anderen Energiespeichers verwendet werden. Dabei wird ausgenutzt, dass beim Entladen eines ersten Energiespeichers die frei werdende elektrische Energie zum Laden eines zweiten Energiespeichers verwendet werden kann; beide Energiespeicher setzen dem elektrischen Strom jeweils einen ohmschen Innenwiderstand entgegen, an dem Wärme als Energieverlust anfällt. Hierdurch werden die Energiespeicher aufgeheizt. Ist einer der Energiespeicher hinreichend entladen bzw. der andere Energiespeicher hinreichend geladen, so wird der Energiefluss umgekehrt.

Das erfindungsgemäße Verfahren ist von Vorteil, weil kein zusätzliches Heizsystem eingebaut werden muss. Dies spart Einbauraum und Fertigungskosten sowie Gewicht; außerdem wird die Anzahl von ausfallgefährdeten Bauteilen reduziert, was die Sicherheit verbessert und den Wartungsaufwand verringert. Weiterhin ist es vorteilhaft, dass keine externe Energieversorgung für das Aufheizen benötigt wird. Ein anderer Vorteil ist es, dass die Energiespeicher sehr gleichmäßig von innen heraus aufgeheizt werden und es im Gegensatz zu einer Aufheizung von außen dadurch vermieden wird, dass die Energiespeicher schneller altern bzw. ungleichmäßig thermisch belastet werden.

In einer bevorzugten Ausführungsform des erfindungsgemäßen Verfahrens wird für mindestens einen der Energiespeicher ein elektrochemischer Energiespeicher verwendet. Dies ist vorteilhaft, weil elektrochemische Energiespeicher aufgrund ihrer hohen Speicherkapazität für Energie häufig eingesetzt werden. Elektrochemische Energiespeicher wie z.B. Lithium-Ionen/FePO4, Blei, NiCd, oder NiNH Akkumulatoren funktionieren nur innerhalb eines bauartbedingten Temperaturbereichs optimal und müssen daher bei geringen Umgebungstemperaturen aufgeheizt werden.

In einer bevorzugten Ausführungsform des erfindungsgemäßen Verfahrens wird für mindestens einen der Energiespeicher ein elektrischer Energiespeicher verwendet. Als elektrischer Energiespeicher kann beispielsweise ein Kondensator, ein UltraCap oder dergleichen eingesetzt werden. Die Verwendung eines elektrischen Energiespeichers ist von Vorteil, weil ein elektrischer Energiespeicher besonders schnell seine elektrische Energie abgeben kann und auch über viele Lade- und Entladezyklen hinweg wenig verschleißt. Häufig werden elektrische und elektrochemische Energiespeicher daher zu einem Hybrid-Energiespeichersystem zusammengeschlossen, bei dem in vorteilhafter Weise der elektrische Energiespeicher schnell verfügbare elektrische Energie und der elektrochemische Energiespeicher eine besonders große Speicherkapazität bereit stellen.

In einer anderen bevorzugten Ausführungsform des erfindungsgemäßen Verfahrens werden als Energiespeicher bauartgleiche Energiespeicher verwendet. Dies ist von Vorteil, weil bauartgleiche Energiespeicher gleiche Innenwiderstände aufweisen und daher eine gleiche Aufheizcharakteristik besitzen. Das Aufheizen von bauartgleichen Energiespeichern lässt sich daher besonders leicht steuern, was ein Vorteil ist.

In einer weiteren bevorzugten Ausführungsform des erfindungsgemäßen Verfahrens werden die Energiespeicher in verschiedenen selbstständigen elektrischen Einheiten verwendet. Dies ist von Vorteil, weil die Energiespeicher an völlig unterschiedlichen Orten eingesetzt werden können. Ein weiterer Vorteil ist es, dass verschiedene Typen von Energiespeichern leicht für das Aufheizen kombiniert werden können.

In einer weiteren bevorzugten Ausführungsform des erfindungsgemäßen Verfahrens wird mindestens einer der Energiespeicher bei einem Fahrzeug, insbesondere einem Schienenfahrzeug, als Traktionsenergiespeicher verwendet. Dies ist von Vorteil, weil Traktionsenergiespeicher wie beispielsweise die Batterien eines Elektroautos oder eines elektrisch angetriebenen Schienenfahrzeugs besonders stark schwankenden Umgebungstemperaturen ausgesetzt sind und daher ein effizientes Heizsystem benötigen. Insbesondere bei Fahrzeugen ist es ein weiterer Vorteil, dass bei dem erfindungsgemäßen Verfahren kein extra Einbauraum und extra Masse für das Heizsystem benötigt werden.

In einer anderen bevorzugten Ausführungsform des erfindungsgemäßen Verfahrens wird mindestens einer der Energiespeicher bei einem Fahrzeug, insbesondere einem Schienenfahrzeug, als Bordenergiespeicher verwendet. Dies ist von Vorteil, weil Bordenergiespeicher in Fahrzeugen häufig schon vorhanden sind und somit kein weiterer Energiespeicher vorgesehen werden muss. Die Bordenergiespeicher sind beispielsweise elektrochemische Energiespeicher wie etwa Batterien und dienen als Energieversorgung für das Bordnetz, also z.B. für Innenraumbeleuchtung. Bordenergiespeicher können bei Fahrzeugen mit Verbrennungsmotoren auch zur Energieversorgung des Starters dienen. Diese Ausführungsform ist insbesondere dann vorteilhaft, wenn ein Fahrzeug mit mindestens einem weiteren Energiespeicher nachgerüstet wird, um unabhängig von einer externen Energiezufuhr über beispielsweise eine Oberleitung oder als Hybridfahrzeug mit Verbrennungs- und Elektromotor betrieben wird. Dabei kann eine sogenannte Traktionssammelschiene in einem Schienenfahrzeug wie einem Zug beispielsweise 110V und bei einer Straßenbahn beispielsweise 24V aufweisen.

In einer anderen bevorzugten Ausführungsform des erfindungsgemäßen Verfahrens wird mindestens einer der Energiespeicher bei einem Fahrzeug, insbesondere einem Schienenfahrzeug, als Zwischenkreiskondensator verwendet. Die Verwendung eines Zwischenkreiskondensators ist vorteilhaft, weil Zwischenkreiskondensatoren häufig, insbesondere bei elektrisch angetriebenen Fahrzeugen, schon vorhanden sind und somit kein weiterer Energiespeicher vorgesehen werden muss.

In einer anderen bevorzugten Ausführungsform des erfindungsgemäßen Verfahrens wird mindestens einer der Energiespeicher stationär verwendet. Dies ist von Vorteil, weil stationäre Energiespeicher häufig an Ladestationen für Elektroautos oder für Schienenfahrzeuge mit Energiespeichern für einen oberleitungslosen Betrieb vorgesehen sind.

In einer weiteren bevorzugten Ausführungsform des erfindungsgemäßen Verfahrens werden die Energiespeicher mittels einer Oberleitung und/oder einer Stromleitung eines Energieversorgungsnetzes verbunden. Dies ist von Vorteil, weil die für ein wechselseitiges Laden- und Entladen vorgesehenen Energiespeicher nicht mehr an einem Ort oder in einem Fahrzeug vorgesehen sein müssen; vielmehr können die Energiespeicher an verschiedenen Orten vorgesehen werden. Beispielsweise können zwei für ein oberleitungsloses Fahren mit Batterien ausgerüstete Schienenfahrzeuge in zwei unterschiedlichen Betriebsbahnhöfen geparkt und über Nacht mittels einer Oberleitung verbunden und geheizt werden.

In einer anderen bevorzugten Ausführungsform des erfindungsgemäßen Verfahrens erfolgt das Laden der Energiespeicher mittels Ladestellern und das Entladen der Energiespeicher mittels Entladestellern. Dies ist vorteilhaft, weil durch die Verwendung von Ladestellen und Entladestellern die Energiespeicher nicht das gleiche Spannungsniveau aufweisen müssen. Lade- und Entladesteller weisen häufig bereits einen Zwischenkreiskondensator auf, so dass die Kombination dieser beiden Ausführungsformen besonders vorteilhaft ist.

In einer bevorzugten Weiterbildung der vorgenannten Ausführungsform des erfindungsgemäßen Verfahrens wird für die Ladesteller und die Entladesteller ein Gleichstrom-Sollwert von null Ampere vorgegeben und die Taktung der Ladesteller und der Entladesteller freigegeben. Hieraus ergibt sich ein Wechselstrom, der - bedingt durch die kurze Zeitdauer eines einzelnen wechselseitigen Ladevorgangs - ohne merkliches Entladen bzw. Laden der Energiespeicher zum Aufheizen führt. Dieses Verfahren ist vorteilhaft, weil keine makroskopischen Lade-/Entladezyklen der Energiespeicher auftreten und diese somit nicht zyklenbedingt altern. Wenn nun noch von einer externen Energiequelle wie einem Spannungsversorgungsnetz, einem weiteren Energiespeicher oder Dergleichen die Energieverluste durch das Aufheizen ausgeglichen werden, ergibt sich der weitere Vorteil, dass im Wesentlichen ein fast unveränderter Energieinhalt der Energiespeicher dauerhaft erhalten wird.

In einer weiteren bevorzugten Ausführungsform des erfindungsgemäßen Verfahrens wird die Temperatur der Energiespeicher überwacht. Dies ist vorteilhaft, weil so die Temperatur der Energiespeicher jederzeit festgestellt werden kann.

In einer bevorzugten Weiterbildung der vorgenannten Ausführungsform des erfindungsgemäßen Verfahrens wird das Verfahren beendet, sobald die Temperatur einen oberen Schwellenwert überschreitet. Dies ist ein Vorteil, weil so ein zu starkes Aufheizen der Energiespeicher verhindert wird. Ein weiterer Vorteil ist es, dass keine elektrische Energie für ein unnötiges Aufheizen verschwendet wird. Ein typischer oberer Schwellenwert ist im Bereich der optimalen Betriebstemperatur der Energiespeicher, beispielsweise 25°C, angesiedelt.

In einer anderen bevorzugten Ausführungsform des erfindungsgemäßen Verfahrens wird das Verfahren gestartet, sobald die Temperatur einen unteren Schwellenwert unterschreitet. Dies ist ein Vorteil, weil so ein zu starkes Auskühlen der Energiespeicher verhindert wird. Ein weiterer Vorteil ist es, dass keine elektrische Energie für ein unnötiges Aufheizen verschwendet wird, wenn die Temperatur noch über dem unteren Schwellenwert liegt. Ein typischer unterer Schwellenwert ist beispielsweise 0°C.

Die Erfindung betrifft ferner eine Energiespeicheranordnung und stellt sich die Aufgabe, eine solche Anordnung vergleichsweise einfach auszugestalten.

Die Lösung dieser Aufgabe besteht in einer Energiespeicheranordnung mit mindestens zwei Energiespeichern, die dafür geeignet ist, mittels einer Lade- und Entladeanordnung mindestens einen ersten Energiespeicher und mindestens einen zweiten Energiespeicher durch wechselseitiges Laden und Entladen des jeweils anderen Energiespeichers aufzuheizen. Es ergeben sich sinngemäß die gleichen Vorteile wie eingangs für das erfindungsgemäße Verfahren beschrieben.

Bevorzugte Ausführungsformen der erfindungsgemäßen Energiespeicheranordnung ergeben sich aus den Unteransprüchen 17 bis 30; dabei ergeben sich sinngemäß die gleichen Vorteile wie eingangs für das erfindungsgemäße Verfahren beschrieben.

Zur weiteren Erläuterung der Erfindung sind in
- Figur 1: ein erstes Ausführungsbeispiel einer Energiespeicheranordnung mit einer Batterie und einem Kondensator und in
- Figur 2: das Entladen der Batterie gemäß dem ersten Ausführungsbeispiel nach Figur 1 und in
- Figur 3: das Laden der Batterie gemäß dem ersten Ausführungsbeispiel nach Figur 1 und in
- Figur 4: Kennlinien für Batteriestrom, Energieinhalt der Batterie und Batterietemperatur gemäß dem ersten Ausführungsbeispiel nach Figur 1 und in
- Figur 5: ein zweites Ausführungsbeispiel einer Energiespeicheranordnung mit einer Batterie und einen Zwischenkreiskondensator und in
- Figur 6: ein drittes Ausführungsbeispiel einer Energiespeicheranordnung mit einer Batterie und einem über eine Energieleitung verbundenen zweiten Energiespeicher und in
- Figur 7: Kennlinien für Batteriestrom, Energieinhalt der Batterie und Batterietemperatur gemäß dem zweiten Ausführungsbeispiel nach Figur 5
dargestellt.

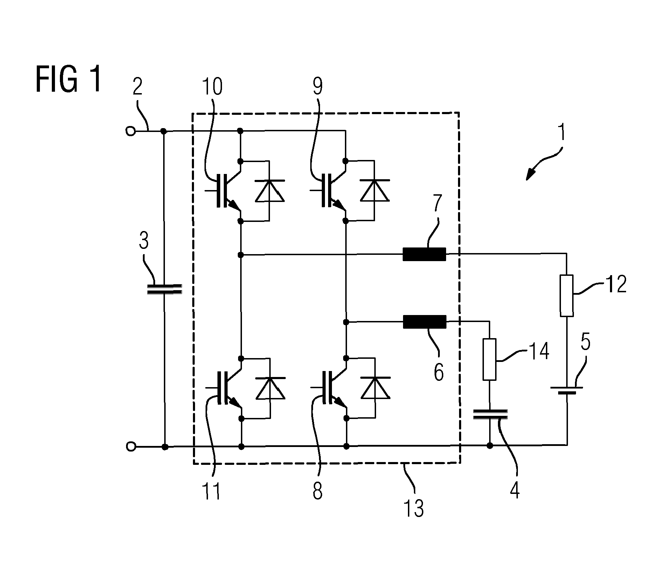

Die Figur 1 zeigt eine Energiespeicheranordnung 1 mit einem Kondensator 4 als erstem Energiespeicher und einer Batterie 5 aus zweitem Energiespeicher sowie einer Lade- und Entladeanordnung 13. Die Batterie 5 weist einen Innenwiderstand 12 auf und ist über eine Drossel 7 und Lade/Entladesteller 10 und 11 mit der Fahrzeugsammelschiene 2 eines nicht gezeigten Schienenfahrzeugs verbunden. Die Fahrzeugsammelschiene 2 weist außerdem einen parallel geschalteten Zwischenkreiskondensator 3 auf. Der Kondensator 4 mit seinem Innenwiderstand 14 ist über eine Drossel 6 und die Lade/Entladesteller 8 und 9 mit der Fahrzeugsammelschiene 2 verbunden. Durch die Lade/Entladesteller ist es gewährleistet, dass die Spannungen von Batterie, Kondensator und Fahrzeugsammelschiene unterschiedlich sein können.

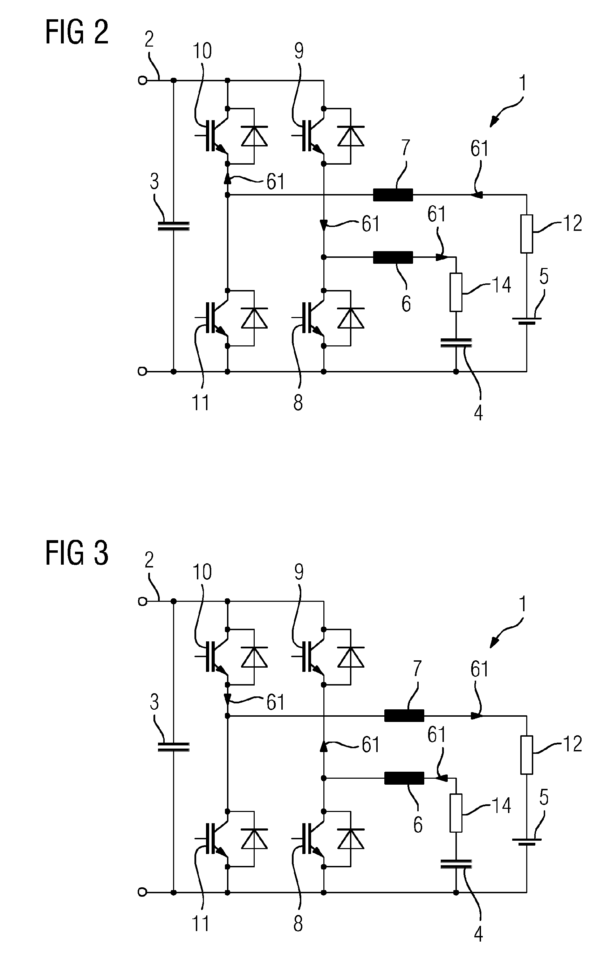

Die Figur 2 zeigt schematisch, wie die Energiespeicheranordnung aus Figur 1 zum Aufheizen verwendet werden kann. Wird die Batterie 5 über den Innenwiderstand 12 entladen (angedeutet durch die Pfeile 61), so ergibt sich über den Steller 10 und den Steller 9 ein Stromfluss in den Kondensator 4. Durch den Stromfluss durch den Widerstand 12 wird Wärme abgegeben, die die Batterie 5 aufheizt.

In der Figur 3 ist im Gegensatz zu der Figur 2 das Entladen des Kondensators beziehungsweise das Laden der Batterie dargestellt. Hierbei verdeutlichen die Pfeile 61 den vom Kondensator durch die Drossel 6 fließenden Strom, der über die Lade/Entladesteller 9 und 10 und die Drossel 7 über den Innenwiderstand 12 der Batterie 5 zugeführt wird. Auch in diesem Fall wird durch die an dem Innenwiderstand 12 anfallende Wärme die Energiespeicheranordnung geheizt.

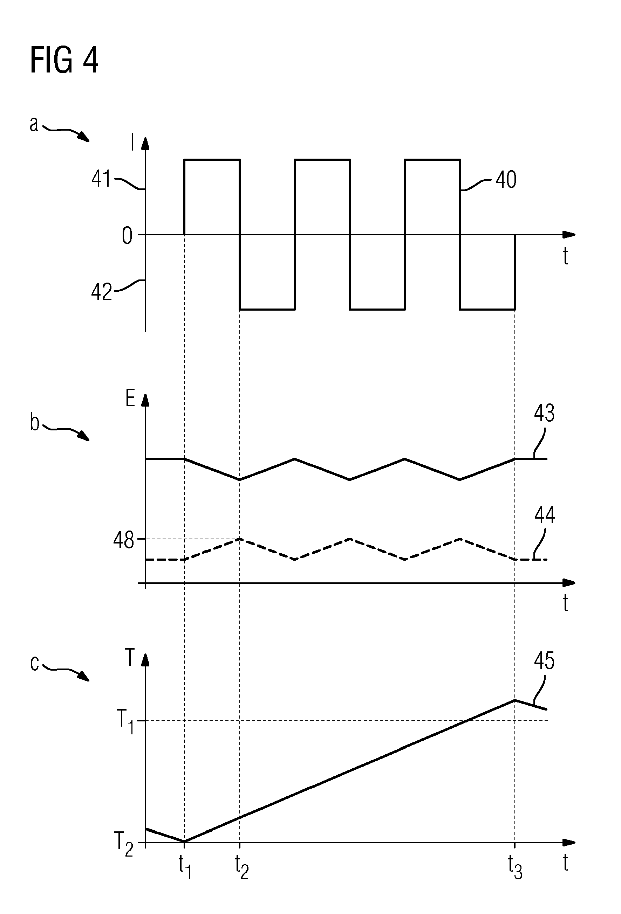

In der Figur 4a ist der Batteriestrom I gegen die Zeit t aufgetragen. Zum Zeitpunkt t1 beginnt das Entladen 41 der Batterie, woraus bis zum Zeitpunkt t2 ein durch die Kennlinie 40 gekennzeichneter Batteriestrom entsteht. Zum Zeitpunkt t2 wird die Lade- beziehungsweise Entladerichtung umgekehrt, woraus sich ein Laden der Batterie 42 ergibt. Die Kennlinie 40 verdeutlicht das wechselseitige Laden von Batterie und Kondensator gemäß der Figuren 1 bis 3.

In der Figur 4b ist der Energieinhalt E der Batterie 4 gegen die Zeit t aufgetragen. Dabei zeigt die Kennlinie 43 den Energieinhalt der Batterie, während die Kennlinie 44 den Energieinhalt des Kondensators anzeigt. Zum Zeitpunkt t1 beginnt das erfindungsgemäße Verfahren mit dem Laden des Kondensators und dem Entladen der Batterie. Zum Zeitpunkt t2 ist der Kondensator vollständig geladen auf einem Energieniveau 48. Der Energieinhalt der Batterie 43 erreicht zum Zeitpunkt t2 ein Minimum, weil die Batterie zum vollständigen Laden des Kondensators verwendet wurde. Im zeitlichen Verlauf bis zum Zeitpunkt t3 sind drei weitere Lade- beziehungsweise Entladezyklen zwischen Batterie und Kondensator dargestellt.

In der Figur 4c ist die Batterietemperatur T gegen die Zeit t aufgetragen. Die Temperatur der Batterie fällt bis zum Zeitpunkt t1 auf den unteren Schwellenwert T2 ab. Zum Zeitpunkt t1 beginnt das erfindungsgemäße Verfahren durch ein wechselseitiges Laden und Entladen von Batterie und Kondensator mit dem Aufheizen der Batterie gemäß der Kennlinie 45. Zum Zeitpunkt t3 erreicht die Kennlinie 45 der Batterietemperatur den oberen Schwellenwert T1, so dass das erfindungsgemäße Verfahren beendet wird. Die Erwärmung setzt sich noch bis zum Zeitpunkt t3 fort, an dem die Batterie 5 wieder ihre ursprüngliche Energie aufweist und das Verfahren beendet wird. Alternativ kann das Verfahren unmittelbar bei Erreichen von T1 abgebrochen werden. Solchen falls kann die Batterie einen geringeren Energieinhalt als zu Beginn aufweisen.

Der Energieverlust zur Deckung der Wärmeenergie ist in Fig. 4 nicht dargestellt. Dieser kann prinzipiell den beteiligten Energiespeichern entnommen werden, oder kann über den Zwischenkreis nachgeliefert werden, wenn z.B. das Fahrzeug extern mit Energie versorgt wird.

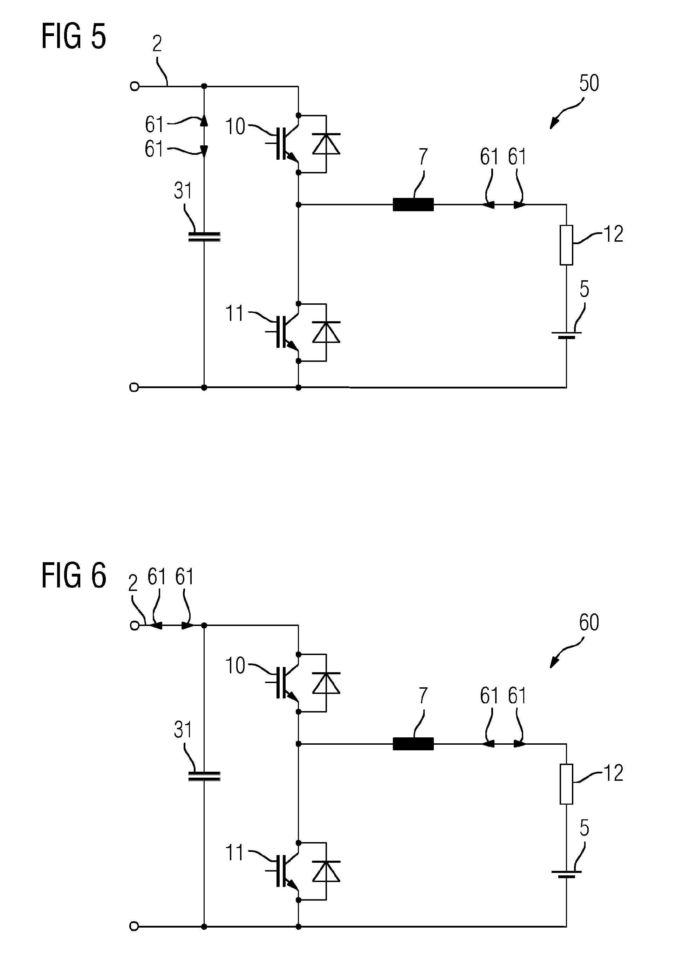

In der Figur 5 ist in dem nicht näher gezeigten Fahrzeug lediglich der Batteriekreislauf mit der Batterie 5 dargestellt. Die Elemente Innenwiderstand 12, Drossel 7 und Lade/Entladesteller 10 und 11 sowie die Sammelschiene 2 und der Zwischenkreiskondensator 31 entsprechen der Darstellung der Figur 1. In der hier gezeigten Ausführungsform erfolgt ein Laden/Entladen der Batterie für das Aufheizen mittels einer direkten Interaktion mit dem Zwischenkreiskondensator 31. Dies ist dargestellt durch die Pfeile 61.

In der Figur 6 ist der gleiche Schaltungsaufbau wie in der Figur 5 gegeben, mit dem Unterschied, dass ein Energieaustausch für das Laden/Entladen der Batterie 5 über die Fahrzeugsammelschiene 2 mit einem externen Energiespeicher erfolgt (nicht gezeigt). Die Pfeile 61 verdeutlichen den Energiefluss. In dieser Variante kann der externe Energiespeicher beispielsweise ein stationärer Energiespeicher einer Ladestation sein oder auch ein über eine Oberleitung verbundener Energiespeicher eines weiteren Fahrzeugs.

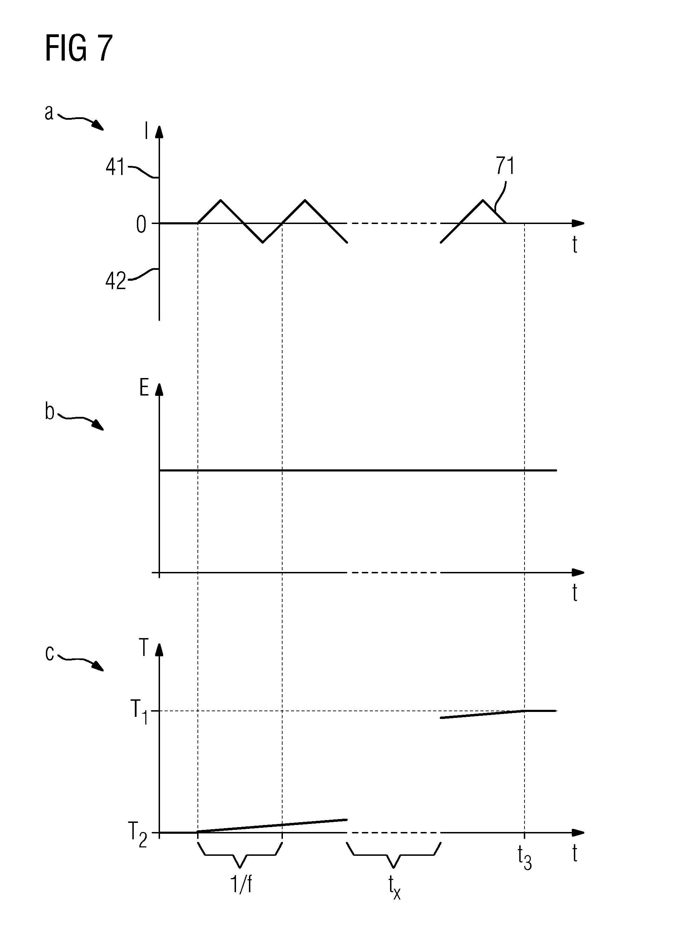

Ein vereinfachter Betrieb der Energiespeicheranordnung 50 gemäß Figur 5 oder 6 ergibt sich, wenn als Gleichstrom-Sollwert für die Batterie 5 Null vorgegeben wird und die Taktung der Hoch-/Tiefsetzsteller 10, 11 freigegeben wird. Dieser Fall ist in der Figur 7 dargestellt. Die Darstellung entspricht den in Figur 4 a-c dargestellten Kennlinien. Figur 7a zeigt, dass lediglich ein Wechselstrom 71 (dreieckförmig) mit der eingestellten Taktfrequenz f der Steller fließt, ohne dass die Batterie 5 dadurch merklich geladen oder entladen wird. Die Zeitachse ist unterbrochen (gestrichelter Bereich tx), weil aufgrund der relativ hohen Taktfrequenz f sehr viele Zyklen erforderlich sind, bis die Batterie 5 die erforderliche Temperatur T1 erreicht. Der Wechselstrom 71 verursacht jedoch die erwünschten Verluste am Innenwiderstand der Batterie, welche diese aufheizen, wie in Figur 7c gezeigt. Dieses Verfahren ist vorteilhaft, weil keine makroskopischen Lade-/Entladezyklen der Batterie auftreten und diese somit nicht zyklenbedingt altert. Wenn nun noch von einer externen Energiequelle wie einem Spannungsversorgungsnetz, einem weiteren Energiespeicher oder Dergleichen die Energieverluste durch das Aufheizen ausgeglichen werden, ergibt sich im Wesentlichen ein fast unveränderter Energieinhalt E der Batterie 5, wie in Figur 7b gezeigt.

## Patentansprüche

1. Verfahren für ein Aufheizen einer Energiespeicheranordnung, bei dem mindestens ein erster Energiespeicher (4) und mindestens ein zweiter Energiespeicher (5) wechselseitig für das Laden und Entladen des jeweils anderen Energiespeichers verwendet werden.

2. Verfahren nach Anspruch 1, bei dem für mindestens einen der Energiespeicher (4,5) ein elektrochemischer Energiespeicher (5) verwendet wird.

3. Verfahren nach Anspruch 1 oder 2, bei dem für mindestens einen der Energiespeicher (4,5) ein elektrischer Energiespeicher (4) verwendet wird.

4. Verfahren nach einem der vorhergehenden Ansprüche, bei dem als Energiespeicher (4,5) bauartgleiche Energiespeicher verwendet werden.

5. Verfahren nach einem der vorhergehenden Ansprüche, bei dem die Energiespeicher (4,5) in verschiedenen selbstständigen elektrischen Einheiten verwendet werden.

6. Verfahren nach einem der vorhergehenden Ansprüche, bei dem mindestens einer der Energiespeicher (4,5) bei einem Fahrzeug, insbesondere einem Schienenfahrzeug, als Traktionsenergiespeicher verwendet wird.

7. Verfahren nach einem der vorhergehenden Ansprüche, bei dem mindestens einer der Energiespeicher (4,5) bei einem Fahrzeug, insbesondere einem Schienenfahrzeug, als Bordenergiespeicher verwendet wird.

8. Verfahren nach einem der vorhergehenden Ansprüche, bei dem mindestens einer der Energiespeicher (4,5) bei einem Fahrzeug, insbesondere einem Schienenfahrzeug, als Zwischenkreiskondensator verwendet wird.

9. Verfahren nach einem der Ansprüche 5 bis 8, bei dem mindestens einer der Energiespeicher (4,5) stationär verwendet wird.

10. Verfahren nach einem der Ansprüche 5 bis 9, bei dem die Energiespeicher (4,5) mittels einer Oberleitung und/oder einer Stromleitung eines Energieversorgungsnetzes verbunden werden.

11. Verfahren nach einem der vorhergehenden Ansprüche, bei dem
das Laden der Energiespeicher (4,5) mittels Ladestellern (8,9,10,11) und das Entladen der Energiespeicher mittels Entladestellern (8,9,10,11) erfolgt.

12. Verfahren nach Anspruch 11, bei dem für die Ladesteller und die Entladesteller ein Gleichstrom-Sollwert von null Ampere vorgegeben und die Taktung der Ladesteller und der Entladesteller freigegeben wird.

13. Verfahren nach einem der vorhergehenden Ansprüche, bei dem die Temperatur der Energiespeicher (4,5) überwacht wird.

14. Verfahren nach Anspruch 13, bei dem das das Verfahren beendet wird, sobald die Temperatur einen oberen Schwellenwert (T₁) überschreitet.

15. Verfahren nach Anspruch 13 oder 14, bei dem das Verfahren gestartet wird, sobald die Temperatur einen unteren Schwellenwert (T₂) unterschreitet.

16. Energiespeicheranordnung mit mindestens zwei Energiespeichern (4,5), die dafür geeignet ist, mittels einer Lade- und Entladeanordnung (13) mindestens einen ersten Energiespeicher (4) und mindestens einen zweiten Energiespeicher (5) durch wechselseitiges Laden und Entladen des jeweils anderen Energiespeichers (4,5) aufzuheizen.

17. Energiespeicheranordnung nach Anspruch 16, die mindestens einen elektrochemischen Energiespeicher (5) umfasst.

18. Energiespeicheranordnung nach einem der Ansprüche 16 oder 17, die mindestens einen elektrischen Energiespeicher (4) umfasst.

19. Energiespeicheranordnung nach einem der Ansprüche 16 bis 18, bei der die Energiespeicher (4,5) bauartgleich sind.

20. Energiespeicheranordnung nach einem der vorhergehenden Ansprüche 16 bis 19, bei der die Energiespeicher (4,5) verschiedenen selbstständigen elektrischen Einheiten zugeordnet sind.

21. Energiespeicheranordnung nach einem der Ansprüche 16 bis 20, bei der mindestens einer der Energiespeicher (4,5) einem Fahrzeug, insbesondere einem Schienenfahrzeug, als Traktionsenergiespeicher zugeordnet ist.

22. Energiespeicheranordnung nach einem der Ansprüche 16 bis 21, bei dem mindestens einer der Energiespeicher (4,5) einem Fahrzeug, insbesondere einem Schienenfahrzeug, als Bordenergiespeicher zugeordnet ist.

23. Energiespeicheranordnung nach einem der Ansprüche 16 bis 22, bei dem mindestens einer der Energiespeicher (4,5) einem Fahrzeug, insbesondere einem Schienenfahrzeug, als Zwischenkreiskondensator zugeordnet ist.

24. Energiespeicheranordnung nach einem der Ansprüche 16 bis 23, bei der mindestens einer der Energiespeicher (4,5) stationär ist.

25. Energiespeicheranordnung nach einem der Ansprüche 16 bis 24, bei der die Energiespeicher (4,5) mittels einer Oberleitung und/oder einer Stromleitung eines Energieversorgungsnetzes verbunden sind.

26. Energiespeicheranordnung nach einem der Ansprüche 16 bis 25, bei der die Lade- und Entladeanordnung (13) jeweils einen Ladesteller (8,9,10,11) und einen Entladesteller (8,9,10,11) für jeden Energiespeicher umfasst.

27. Energiespeicheranordnung nach Anspruch 26, bei der die die Ladesteller und die Entladesteller für einen vorgegebenen Gleichstrom-Sollwert von null Ampere bei gleichzeitig freigegebener Taktung der Ladesteller und der Entladesteller geeignet sind.

28. Energiespeicheranordnung nach einem der Ansprüche 16 bis 27, bei der eine Temperaturmesseinrichtung für das Überwachen der Temperatur der Energiespeicher (4,5) vorgesehen ist.

29. Energiespeicheranordnung nach Anspruch 28, bei der die Lade- und Entladeanordnung (13) dafür geeignet ist, das wechselseitige Laden und Entladen zu beenden, sobald die Temperatur einen oberen Schwellenwert (T₁) überschreitet.

30. Energiespeicheranordnung nach Anspruch 28 oder 29, bei der die Lade- und Entladeanordnung (13) dafür geeignet ist, das wechselseitige Laden und Entladen zu starten, sobald die Temperatur einen unteren Schwellenwert (T₂) unterschreitet.
